# EUROPÄISCHE PATENTANMELDUNG

(11) **EP 2 351 476 A1**
(43) Veröffentlichungstag der Anmeldung: **03.08.2011**
(21) Anmeldenummer: 10188780.0
(22) Anmeldetag: 26.10.2010
(51) Int. Cl.: A01B 59/06

(54) **Dreipunktaufhängung und Anhänger mit einer Dreipunktaufhängung**

(30) Priorität: 30.10.2009 DE 202009014665 U
(71) Anmelder: Zunhammer, Sebastian, 83301 Traunreut (DE)
(72) Erfinder: Zunhammer, Sebastian, 83301 Traunreut (DE)
(74) Vertreter: Heilein, Ernst - Peter

(57) **Zusammenfassung**

Die Erfindung betrifft eine Dreipunktaufhängung zur Ankoppelung eines Arbeitsgeräts mit einem am Fahrzeugrahmen einer Zugmaschine, eines Selbstfahrers oder eines Anhängers angelenkten Rahmen, an dem zwei über zwei erste Stellglieder um eine erste horizontale Drehachse schwenkbar angelenkte Unterlenkern und ein Oberlenker ausgebildet sind. Die Erfindung betrifft auch einen Anhänger mit einer Dreipunktaufhängung. Erfindungswesentlich ist, dass der angelenkte Rahmen über zumindest ein weiteres Stellglied um eine zweite horizontale Drehachse schwenkbar ausgebildet ist.

## Beschreibung

Die Erfindung betrifft eine Dreipunktaufhängung zur Ankoppelung eines Arbeitsgeräts mit einem am Fahrzeugrahmen einer Zugmaschine, eines Selbstfahrers oder eines Anhängers angelenkten Rahmen, an dem zwei über zwei erste Stellglieder um eine erste horizontale Drehachse schwenkbar angelenkte Unterlenkern und ein Oberlenker ausgebildet sind. Die Erfindung betrifft auch einen Anhänger mit einer Dreipunktaufhängung.

Aus dem Stand der Technik ist eine Dreipunktaufhängung für Zugmaschinen und selbstfahrende Arbeitsmaschinen zum Heben, Senken und/oder Schwenken von zumindest einem am Heck und/oder an der Front angeordneten Arbeitsgerät bekannt.

Die Arbeitsgeräte sind über die Dreipunktaufhängung an der Zugmaschine angeschlossen. Zugleich erfolgt über die Aufhängung die Anpassung der Arbeitshöhe. Hierzu sind Stellglieder verwirklicht, mit denen die am Heck bzw. an der Front angebrachten Unterlenker, insbesondere um eine im Wesentlichen horizontale Achse schwenkbar sind. Darüber hinaus ist noch eine geringfügige seitliche Schwenkbarkeit gegeben. Mittels der Stellglieder wird ein an den Unterlenkern angebrachtes Arbeitsgerät getragen und im Verhältnis zum Untergrund angehoben oder abgesenkt.

Des weiteren müssen die Stellglieder abhängig von dem anzukoppelnden Gerät bzw. Arbeitseinsatz es ermöglichen, dass die Unterlenker in gewissem Masse seitlich frei bewegbar sind. Bei anderen Arbeitseinsätzen ist eine vertikale freie Verschwenkbarkeit erforderlich. Insbesondere sind hierfür Hydraulikzylinder im Einsatz, die in die Zugmaschine oder die Arbeitsmaschine integriert sind und zwei parallele Zylinder umfassen. Die Unterlenker weisen an ihren freien Enden Kuppelmittel zur Verbindung mit einem anzubauenden Arbeitsgerät auf. Der Oberlenker der Dreipunktaufhängung ist zumeist in passiver Weise mit dem Arbeitsgerät verbunden.

Die EP 1 116 430 A1 beschreibt eine gattungsgemäße Dreipunktaufhängung mit unter Zwischenschaltung eines Anhängebocks an traktorseitigen unteren Anlenkpunkten schwenkbar angelenkten Unterlenkern und zumindest einem an einem traktorseitigen oberen Anlenkpunkt schwenkbar angelenkten Oberlenker, wobei die Unterlenker geräteseitig jeweils einen unteren Kupplungspunkt und der Oberlenker geräteseitig einen oberen Kupplungspunkt für den Anschluss des Arbeitsgerätes aufweisen und die Unterlenker und/oder der Oberlenker zum Heben, Senken und/oder Schwenken mittels Zylinderkolbenanordnungen betätigbar sind.

Aus der DE 101 22 955 ist eine Dreipunktaufhängung für ein Arbeitsgerät bekannt geworden, die mit einem Rahmen versehen ist, der um eine vertikale Schwenkachse drehbar ist. Das an dem Rahmen befestigte Paar Zugarme, das um eine horizontale Achse schwenkbar ist und die an dem Rahmen befestigte Zugstange werden bei der Bewegung des Rahmens mitgedreht.

Da die Arbeitsgeräte, insbesondere landwirtschaftliche Geräte oder Maschinen zur Bodenbearbeitung oder Düngung oft eine Arbeitsbreite von mehreren Metern aufweisen, müssen diese für den Transport von und zum Einsatzort zusammengeklappt werden. Die geschieht beispielsweise indem das Arbeitsgerät über die Dreipunktaufhängung angehoben wird, und die beiden angelenkten Ausleger nach oben beigezogen werden. Diese Transportform unterliegt jedoch einer Höhenbeschränkung, was wiederum eine Beschränkung der Arbeitsbreiten bedingt.

Der Erfindung liegt die Aufgabe zugrunde, eine gattungsgemäße Dreipunktaufhängung bereitzustellen, mit der Arbeitsgeräte mit großen Arbeitsbreiten transportiert werden können und die besonders einfach und funktionsgerecht aufgebaut ist.

Diese Aufgabe wird erfindungsgemäß durch die kennzeichnenden Merkmale des Anspruchs 1 gelöst. Die Unteransprüche betreffen bevorzugte Ausführungsformen, welche einzeln oder in Kombination miteinander eingesetzt werden können.

Die erfindungsgemäße Dreipunktaufhängung zeichnet sich dadurch aus, dass ein angekoppeltes Arbeitsgerät nicht nur über die Unterlenker getragen und im Verhältnis zum Untergrund angehoben oder abgesenkt, sondern mittels zumindest eines weiteren Stellglieds um eine zweite horizontale Drehachse schwenkbar ausgebildet ist. Mit der vorliegenden Erfindung läßt sich demnach über eine zweite horizontale Drehachse ein Arbeitsgerät zunächst um etwa 90° nach oben schwenken. Dies ermöglicht es im Gegensatz zum Stand der Technik die angelenkten Ausleger zur Seite, d.h. parallel zur Zugmaschine oder zum Selbstfahrer und nicht nach oben beizuziehen. Damit lassen sich Arbeitsgeräte mit großen Arbeitsbreiten einfach und sicher von und zum Einsatzort transportieren.

Da Zugmaschinen und Selbstfahrer bereits eine bestimmte Breite aufweisen, kann es nachteilig bzw. gegebenenfalls aufgrund einer Breitenbeschränkung nicht möglich sein, die Ausleger eines um 90° nach oben geschwenkten Arbeitsgeräts seitlich beizuziehen.

Ein weiterer Gegenstand der vorliegenden Erfindung ist daher ein Anhänger mit einer erfindungsgemäßen Dreipunktaufhängung. Der Anhänger ist an eine Zugmaschine oder einen Selbstfahrer angekoppelt, und beispielsweise als einachsiger Aufleger oder als zwei- oder mehrachsiger eigenständiger Anhänger ausgebildet. Durch den Anhänger und die am Heck des Anhängers ausgebildete erfindungsgemäße Dreipunktaufhängung wird zum einen Stauraum hinter der Zugmaschine oder dem Selbstfahrer und zum anderen eine Transportauflage für ein an der erfindungsgemäßen Dreipunktaufhängung angekoppeltes Arbeitsgerät geschaffen.

Das Arbeitsgerät, beispielsweise ein Grubber, Gülleinjektor, Schlitzgerät oder Gülleverteiler, ist sowohl während eines Arbeitseinsatzes als auch während des Transports an der am Heck des Anhängers befindlichen Dreipunktaufhängung angekoppelt. Sämtliche Versorgungsleitungen, wie beispielsweise Schlauch- und Druckleitungen, für das Arbeitsgerät werden von der Zugmaschine oder dem Selbstfahrer über den Anhänger zu dessen Heck geführt. Ferner sind am Heck alle für das jeweilige Arbeitsgerät nötigen Anschlüsse vorgesehen. Während des Betriebes bzw. Arbeitseinsatzes bilden demnach Zugmaschine oder Selbstfahrer, Anhänger und Arbeitsgerät einen Zug.

Über die erfindungsgemäße Dreipunktaufhängung am Heck des erfindungsgemäßen Anhängers läßt sich das Arbeitsgerät für den Transport zum und vom Einsatzort auf den Anhänger verladen, dergestalt, dass die Ausleger in Fahrtrichtung aufliegen. Hierzu wird nach dem Arbeitseinsatz das Arbeitsgerät zunächst über eine horizontale Schwenkachse nach oben gedreht (verschwenkt) und anschließend die Ausleger beigezogen.

Erfindungsgemäß sind der Oberlenker und die Unterlenker an einen Rahmen der Dreipunktaufhängung angelenkt. Der Rahmen wiederum ist über einen, vorzugsweise zwei Anlenkpunkte am Fahrzeugrahmen angelenkt. Der Rahmen bildet eine eigenständige Vorrichtung zum drehen eines angekoppelten Arbeitsgeräts um bis zu 90° mittels eines, vorzugsweise zwei, bevorzugt als Hydraulikzylinder ausgebildetes Stellglieds. Das Stellglied ist am Rahmen der Dreipunktaufhängung und am Fahrzeugrahmen angelenkt.

Die Erfindung eignet sich insbesondere um landwirtschaftliche Arbeitsgeräte mit erheblichen Arbeitsbreiten, wie beispielsweise Grubber, Gülleinjektoren, Schlitzgeräte oder Gülleverteiler, von und zum Einsatzort zu transportieren. Gleichzeitig bilden das landwirtschaftliche Arbeitsgerät und der erfindungsgemäße Anhänger ein neues nützliches System zur Bodenbearbeitung oder Düngung; d.h. eine feste oder lösbare Kombination einer Transportvorrichtung und eines Arbeitsgeräts, wobei das Arbeitsgerät auch während des Arbeitseinsatzes an der Transportvorrichtung angekoppelt bleiben kann und so ein neues Gerät geschaffen wird.

Ein Ausführungsbeispiel der Erfindung ist in den Figuren rein schematisch dargestellt und wird nachfolgend näher beschrieben. Es zeigt:
- **Fig. 1**: eine Heckansicht einer Dreipunktaufhängung,
- **Fig. 2**: eine perspektivische Ansicht eines Anhängers mit einer Dreipunktaufhängung von in Fahrtrichtung gesehen links oben,
- **Fig.**: **3** eine geschnittene Seitenansicht eines Anhängers mit einer Dreipunktaufhängung in Arbeitsstellung,
- **Fig.**: **4** eine geschnittene Seitenansicht eines Anhängers mit einer Dreipunktaufhängung in Transportstellung und
- **Fig. 5**: eine perspektivische Ain Transportstellung von in Fahrtrichtung gesehen links oben.nsicht eines Anhängers mit einer Dreipunktaufhängung in Transportstellung von in Fahrtrichtung gesehen links oben.

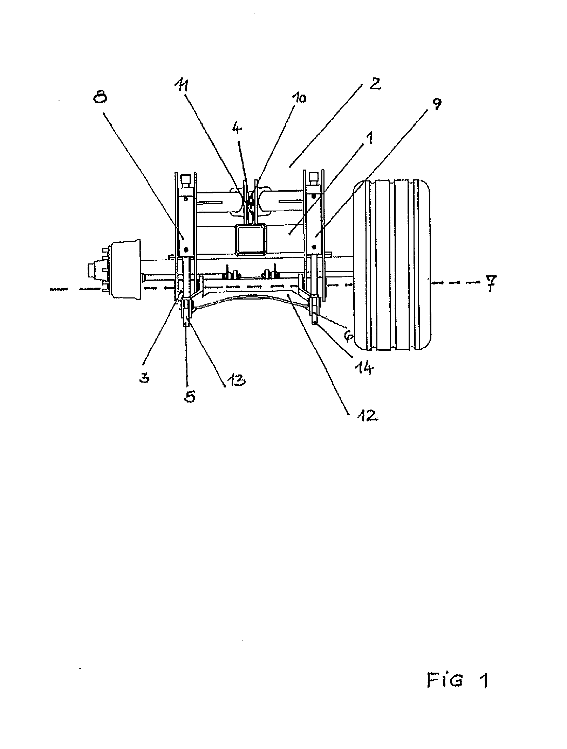

In Figur 1 ist die Heckansicht einer erfindungsgemäßen Dreipunktaufhängung dargestellt. An einem Fahrzeugrahmen 1 ist eine verschwenkbare Dreipunktaufhängung 2 zur Ankopplung eines Arbeitsgerätes angelenkt, die im Wesentlichen aus einem Rahmen 3, einem Oberlenker 4 und zwei Unterlenkern 5, 6 besteht. Die beiden Unterlenker 5, 6 sind am Rahmen 3 angelenkt und um eine erste horizontale Achse 7 verschwenkbar. Zur Verschwenkung der Unterlenker, d.h. zum im Verhältnis zum Untergrund anheben und absenken der Unterlenker, dienen zwei, als Hydraulikzylinder ausgebildete erste Stellglieder 8, 9.

Der Oberlenker 4 ist über ein erstes Kugelgelenk 10 am Rahmen 3 befestigt. An seinem freien Ende ist der Oberlenker 4 mit einem zweiten Kugelgelenk 11 ausgestattet. Die beiden Unterlenker 5, 6 der Dreipunktaufhängung 3 sind über eine Quertraverse 12 miteinander starr verbunden. An ihren freien Enden sind die Unterlenker 5, 6 mit je einem dritten und vierten Kugelgelenk 13, 14 versehen. Die Kugelgelenke 13, 14 und das Kugelgelenk 11 am freien Ende des Oberlenkers 9 nehmen ein nicht dargestelltes Arbeitsgerät auf.

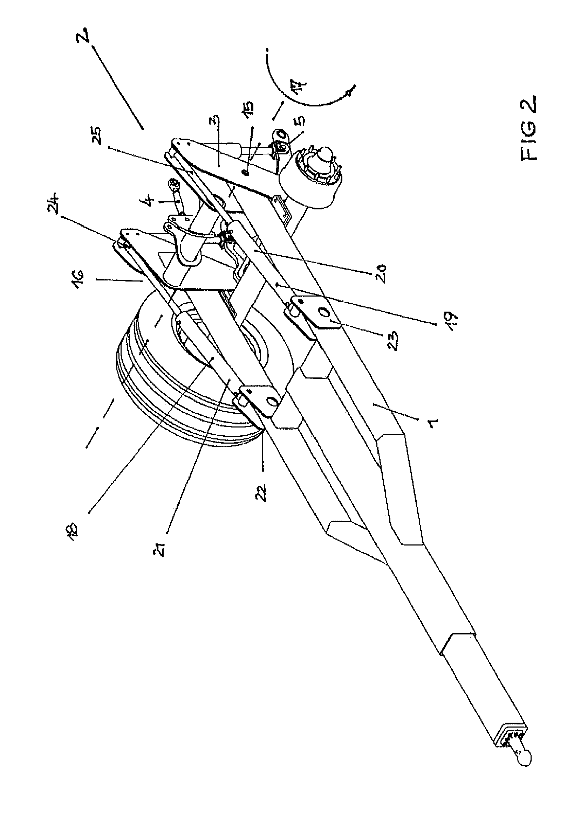

Figur 2 zeigt eine perspektivische Ansicht eines erfindungsgemäßen Anhängers mit einer Dreipunktaufhängung von in Fahrtrichtung gesehen links oben. Die Dreipunktaufhängung 2 ist am Heck eines einachsigen Anhängers angelenkt. Die Verbindung der Anlenkpunkte 15, 16 stellt eine zweite horizontale Drehachse 17 dar, mittels der die Dreipunktaufhängung 2 horizontal schwenkbar ist. Hierzu wird der starre Rahmen 3 mit dem Oberlenker 4 und den beiden Unterlenkern 5, 6 mittels der als Hydraulikzylinder ausgeführten weiteren Stellglieder 18, 19 um die Drehachse 17 gedreht. Dadurch lässt sich ein angekoppeltes Arbeitsgerät um etwa 90° nach oben schwenken. Die Zylinderrohre 20, 21 der Stellglieder 18, 19 sind am Fahrzeugrahmen 1 an zweite Anlenkpunkte 22, 23 angelenkt. Die Kolbenstangen 24, 25 sind über Kugelgelenke und Bolzen an dem Rahmen 3 angelenkt.

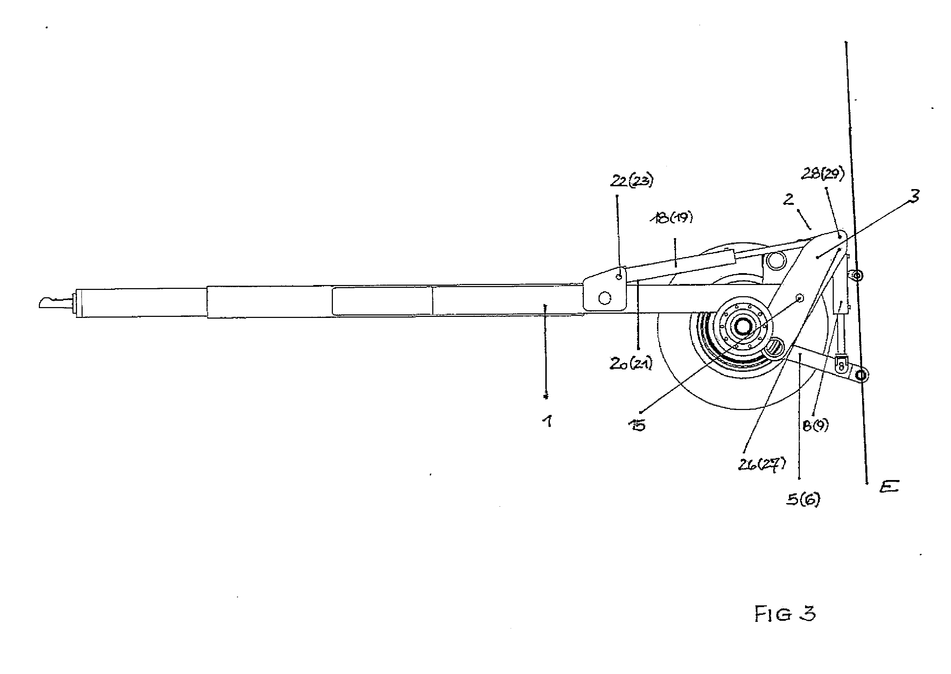

Figur 3 zeigt eine geschnittene Seitenansicht eines erfindungsgemäßen Anhängers mit dem Fahrzeugrahmen 1 und der Dreipunktaufhängung 2 in Arbeitsstellung. Die Arbeitsstellung wird bildlich dargestellt durch eine Ebene E, die durch die Gelenke 11, 13 und 14 verläuft.

Beide Unterlenker 5, 6 sind jeweils über ein als Hydraulikzylinder ausgeführtes Stellglied 8, 9 am Rahmen 3 der Dreipunktaufhängung 2 angelenkt. Es besteht demnach keine unmittelbare Verbindung zwischen Unterlenker 5, 6 und Fahrzeugrahmen 1. Die Hydraulikzylinder 8, 9 bestehen aus je einer Kolbenstange und je einem Zylinderrohr, wobei die Kolbenstange am Unterlenker und das Zylinderrohr am Rahmen 3 an je einem dritten Anlenkpunkt 26, 27 angelenkt ist.

Oberhalb der Anlenkpunkte 26, 27 für die Hydraulikzylinder 8, 9 am Rahmen 3 sind weitere als Hydraulikzylinder ausgebildete Stellglieder 18, 19 an vierten Anlenkpunkten 28, 29 angelenkt. Über diese Stellglieder hat der Rahmen 3 der Dreipunktaufhängung 2 einen unmittelbaren Kontakt zum Fahrzeugrahmen 1. Die Zylinderrohre 20, 21 sind über je ein Kugelgelenk in zweiten Anlenkpunkten 22, 23 mit dem Fahrzeugrahmen 1 beweglich verbunden und die beiden Kolbenstangen sind über je ein Gelenklager in den Anlenkpunkten 28, 29 mit dem Rahmen 3 der Dreipunktaufhängung 2 verbunden.

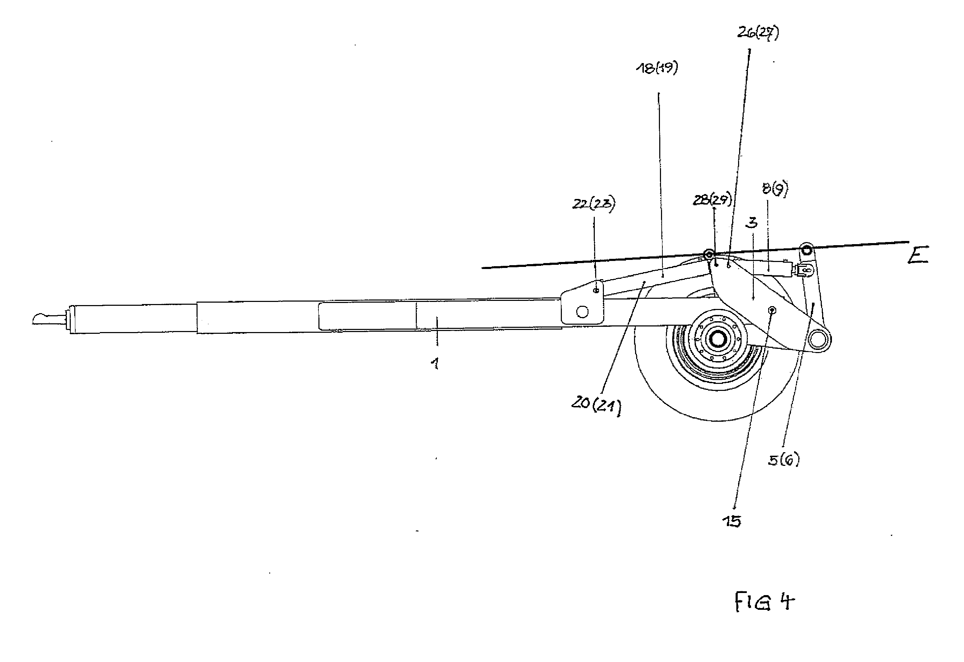

Figur 4 zeigt eine geschnittene Seitenansicht eines Anhängers mit einer Dreipunktaufhängung in Transportstellung. Sind die Kolbenstangen der Stellglieder 18, 19 vollständig in die Zylinderrohre 20, 21 eingefahrenen ist die Dreipunktaufhängung 2 um die zweite horizontale Drehachse 17 um ca. 90° geschwenkt. Dies bedingt auch für ein an der Dreipunktaufhängung 2 angekoppeltes Arbeitsgerät (nicht in der Figur) eine Verschwenkung um ca. 90°, dergestalt, dass das Arbeitsgerät über eine horizontale Drehachse nach oben geschwenkt ist.

Die Verschwenkung in die Transportstellung ist bildlich durch die Ebene E dargestellt, die durch die Gelenke 11, 13 und 14 verläuft. Im Anschluss lassen sich dann am Arbeitsgerät angelenkte Ausleger beiziehen und auf dem Transportanhänger absetzen. Im Ergebnis, d.h. in einer Transportposition liegt auf dem erfindungsgemäßen Anhänger ein nach oben geschwenktes Arbeitsgerät mit in Fahrtrichtung beigezogenen Auslegern auf.

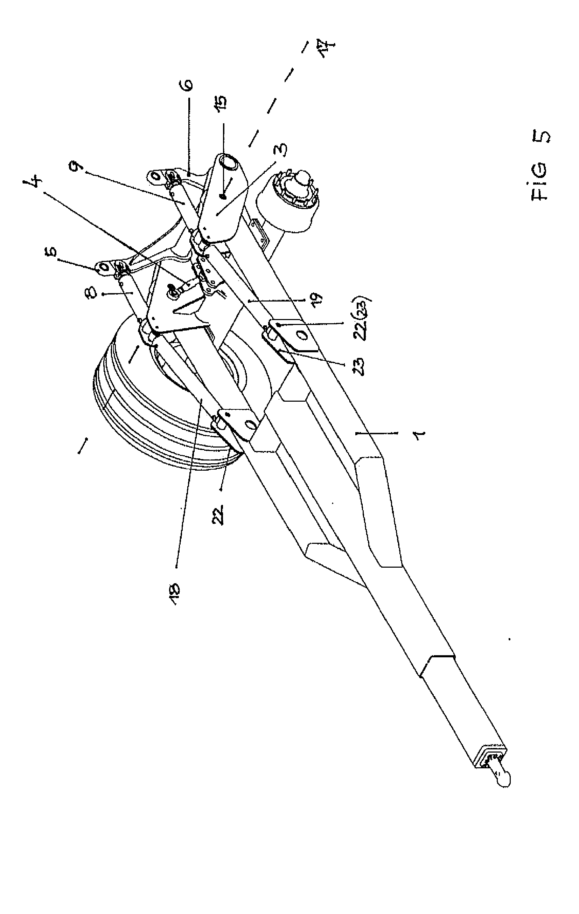

Figur 5 zeigt eine perspektivische Ansicht eines Anhängers mit einer Dreipunktaufhängung in Transportstellung von in Fahrtrichtung gesehen links oben. In dieser Stellung sind die Kolbenstangen der Stellglieder 18, 19 vollständig in die Zylinderrohre eingefahrenen. Der Rahmen 3, umfassend die Unterlenker 5, 6 und den Oberlenker 4 ist im Vergleich zur Arbeitsstellung über die horizontale Drehachse 17 mit den Anlenkpunkten 15, 16 um ca. 90° nach oben gedreht.

Abweichend von diesem Ausführungsbeispiel ist es auch möglich, den Rahmen 3 lediglich über ein einzelnes Stellglied um die zweite horizontale Drehachse 17 zu schwenken.

### Bezugszeichenliste

- 1: Fahrzeugrahmen
- 2: Dreipunktaufhängung
- 3: Rahmen
- 4: Oberlenker
- 5: Unterlenker
- 6: Unterlenker
- 7: erste horizontale Drehachse
- 8: erstes Stellglied
- 9: erstes Stellglied
- 10: erstes Kugelgelenk
- 11: zweites Kugelgelenk
- 12: Quertraverse
- 13: drittes Kugelgelenk
- 14: viertes Kugelgelenk
- 15: erster Anlenkpunkt
- 16: erster Anlenkpunkt
- 17: zweite horizontale Drehachse
- 18: weiteres Stellglied
- 19: weiteres Stellglied
- 20: Zylinderrohr
- 21: Zylinderrohr
- 22: zweiter Anlenkpunkt
- 23: zweiter Anlenkpunkt
- 24: Kolbenstange
- 25: Kolbenstange
- 26: dritter Anlenkpunkt
- 27: dritter Anlenkpunkt
- 28: vierter Anlenkpunkt
- 29: vierter Anlenkpunkt
- E: Ebene

## Patentansprüche

1. Dreipunktaufhängung zur Ankoppelung eines Arbeitsgeräts mit einem am Fahrzeugrahmen einer Zugmaschine, eines Selbstfahrers oder eines Anhängers angelenkten Rahmen (3), an dem zwei über zwei erste Stellglieder (8, 9) um eine erste horizontale Drehachse (7) schwenkbar angelenkte Unterlenkern (5, 6) und ein Oberlenker (4) ausgebildet sind, **dadurch gekennzeichnet, dass** der angelenkte Rahmen (3) über zumindest ein weiteres Stellglied (18, 19) um eine zweite horizontale Drehachse (17) schwenkbar ausgebildet ist.

2. Dreipunktaufhängung nach Anspruch 1, **dadurch gekennzeichnet, dass** die beiden Unterlenker (5, 6) der Dreipunktaufhängung (3) über eine Quertraverse (12) miteinander verbunden sind.

3. Dreipunktaufhängung nach Anspruch 1 oder 2, **dadurch gekennzeichnet, dass** oberhalb der Anlenkpunkte (26, 27) für die Stellglieder (8, 9) am Rahmen (3) zwei weitere Stellglieder (18, 19) an Anlenkpunkten (28, 29) angelenkt sind.

4. Dreipunktaufhängung nach Anspruch 1, 2 oder 3, **dadurch gekennzeichnet, dass** der Rahmen (3) der Dreipunktaufhängung (2) an den Anlenkpunkten (15, 16) unmittelbar und an den Anlenkpunkten (28, 29) über die Stellglieder (18, 19) mittelbar an dem Fahrzeugrahmen angelenkt ist.

5. Anhänger mit einer Dreipunktaufhängung nach einem der Ansprüche 1 bis 4.

6. Anhänger nach Anspruch 5, **dadurch gekennzeichnet, dass** die Versorgungsleitungen für das Arbeitsgerät von der Zugmaschine oder dem Selbstfahrer über den Anhänger zu dessen Heck geführt sind, und dass alle für das jeweilige Arbeitsgerät nötigen Anschlüsse am Heck vorgesehen sind.

7. Anhänger nach Anspruch 5 oder 6, **dadurch gekennzeichnet, dass** der Anhänger als einachsiger Aufleger oder als zwei- oder mehrachsiger eigenständiger Anhänger ausgebildet ist.

8. Anhänger nach einem der Ansprüche 5, 6 oder 7, **gekennzeichnet durch** eine Transportauflage für ein an der Dreipunktaufhängung angekoppeltes Arbeitsgerät.
